# EUROPEAN PATENT APPLICATION

(11) **EP 2 587 356 A2**
(43) Date of publication of application: **01.05.2013**
(21) Application number: 12190263.9
(22) Date of filing: 26.10.2012
(51) Int. Cl.: G06F 3/0482, G06F 3/0488

(54) **Controlling method for basic screen and portable device therefore**

(30) Priority: 28.10.2011 KR 20110110901
(71) Applicant: Samsung Electronics Co., Ltd, Gyeonggi-do 443-742 (KR)
(72) Inventor: Park, Youngjoo, 443-742 Gyeonggi-do (KR)
(74) Representative: Harrison Goddard Foote

(57) **Abstract**

A method for controlling a basic screen includes receiving an input signal that requests an output of a basic screen of a terminal, checking a basic screen list including a menu page and a list of one or more basic pages which are managed in the same level as that of the menu page and include screen information according to the basic screen output request, selecting a page which is set as an initial page from the basic screen list, and outputting the selected initial page.

## Description

### BACKGROUND OF THE INVENTION

### 1. Field of the Invention

The present invention relates generally to a basic screen of a portable terminal, and more particularly, to a method for controlling a basic screen, which allows user to more easily select and operate a frequently used page, and a terminal that supports the same.

### 2. Description of the Related Art

Portable terminals supporting a mobile calling function are being widely used in various fields due to their convenience and portability. Such portable terminals allow various input methods for providing user functions. For example, many existing portable terminals perform various operations, such as where a user selects a specific image to be displayed in a display unit, using a touch panel in a portable terminal that provides a touch screen including a touch panel and a display unit. Further, the portable terminal generates a touch event according to user operation, and controls an application program corresponding to a user function based on the touch event.

Further, the portable terminal provides a relatively large screen as the portable terminal is developed as a smart phone type, and supports various user functions due to a robust processor. As such, in recently developed portable terminals, the importance of the basic screen is increasing. The conventional portable terminal supports various menus in a large screen, and allows a user to select and operate a user-desired menu in one page.

However, when many menus are allocated to one page, it takes time for a user to find and select a desired menu, which results in waiting time in selecting and activating a searched menu item. Consequently, it takes a significant time for user to perform a desired function, which is inconvenient to user.

### SUMMARY OF THE INVENTION

Accordingly, the present invention has been made in view of the above problems and/or disadvantages, and provides a method for controlling a basic screen capable of increasing reactivity to function activation by minimizing time that takes in selecting and activating a user-desired function, and a terminal that supports the same.

According to one aspect of the present invention, there is provided a method for controlling a basic screen, which allows user to quickly and easily find and operate a creation user-desired user function, and a terminal that supports the same.

According to another aspect of the present invention, there is provided a method for controlling a basic screen capable of increasing reactivity to a user-desired user function provision, and appropriately managing electric power, and a terminal that supports the same.

According to an aspect of the present invention, a method for controlling a basic screen includes receiving an input signal that requests an output of a basic screen of a terminal, checking a basic screen list including a menu page and a list of one or more basic pages which are managed in the same level as that of the menu page and include screen information according to the basic screen output request, selecting a page which is set as an initial page from the basic screen list, and outputting the selected initial page.

According to another aspect of the present invention, a method for controlling a basic screen includes outputting a menu page, receiving an input signal for the page turning of a menu page, and outputting a basic page consisting of a screen according to operation of at least one user function according to the input signal.

According to another aspect of the present invention, a terminal for controlling a basic screen includes at least one of an input unit for generating an input signal that requests an output of a basic screen, and a touch screen, a storage unit for storing a basic page list including a menu page and one or more basic pages which are managed in the same level as that of the menu page, and include screen information corresponding to at least one user function, and a controller that controls to output a page, which is set as the initial page in the basic screen list, in the touch screen.

### BRIEF DESCRIPTION OF THE DRAWINGS

The above and other aspects, features and advantages of the present invention will be more apparent from the following detailed description taken in conjunction with the accompanying drawings, in which:
FIG. 1 is a block diagram illustrating a construction of a terminal according to an embodiment of the present invention;
FIG. 2 is a diagram illustrating an example of a controller of FIG. 1, according to an embodiment of the present invention.
FIG. 3 is a diagram illustrating an example of a user interface related with a function of providing a basic screen, according to an embodiment of the present invention;
FIG. 4 is a diagram illustrating another example of a user interface related with a function of providing a basic screen, according to an embodiment of the present invention;
FIG. 5 is a diagram illustrating setting an initial page and removing a page among functions of providing a basic screen, according to an embodiment of the present invention;
FIG. 6 is a diagram illustrating a function of adding a page in a function of providing a basic screen, according to an embodiment of the present invention; and
FIG. 7 is a flowchart illustrating a method for providing a basic screen, according to an embodiment of the present invention.

### DETAILED DESCRIPTION OF EMBODIMENTS OF THE PRESENT INVENTION

Various embodiments of the present invention are described in detail with reference to the accompanying drawings. The same or like reference numbers are used throughout the drawings to refer to the same or like elements. Detailed description of well-known functions and structures is omitted to avoid obscuring the subject matter of the present invention.

An aspect of the present invention provides integration of various service views of a menu screen, in which a user directly uses necessary services without switching or launching service applications. That is, according to an aspect of the present invention, there is provided a very fast route for accessing a service to user, by providing a page for searching for a previously performed task in the left route of the menu screen. The previously performed task search page could be named as page #0, when a menu page is defined as page #1. As such, the present invention performs a quick conversion to a specific task through a simple scrolling of the menu screen in the right direction without performing a search of an icon corresponding to a service application and a launching process of the application.

Hereinafter, the components related with the present invention and the roles of the components will be considered in detail.

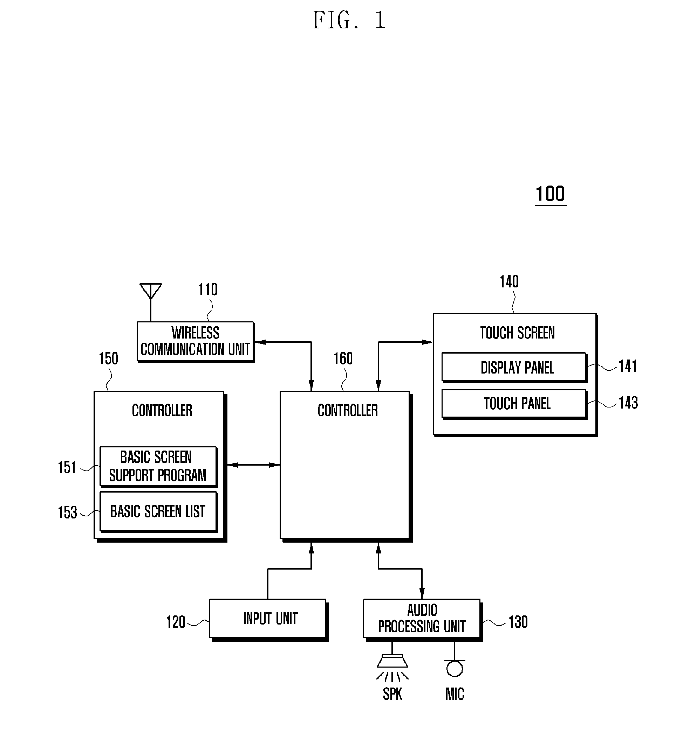

FIG. 1 is a block diagram illustrating a construction of a terminal which supports a function of providing a basic screen according to an embodiment of the present invention.

Referring to FIG. 1, a terminal, according to an embodiment of the present invention, includes a communication unit 110, an input unit 120, an audio processing unit 130, a touch screen 140, a storage unit 150, and a controller 160.

The terminal 100 having such a construction supports to provide a page related with various user functions in the same level as that of a menu page as a basic screen through a touch screen 140. As such, a user searches for various basic pages related with user functions, which are preset or set as a default, without a separate depth search in a level where a menu page is outputted. In this process, the terminal 100 activates the user function to provide a basic page related with at least one user function, and provide screen information according to activation as basic page information. Further, when the basic page is not outputted in the current display panel 141 screen, the terminal 100 supports to minimize consumption of power and use of other data by maintaining a user function related with the basic page in the slip state.

The communication unit 110 performs forming a communication channel for a voice call, forming a communication channel for a video call, and forming a communication channel for transmission of data such as an image and a message, etc. under the control of the controller 160. That is, the communication unit 110 forms a voice call channel, a data communication channel and a video call channel between mobile communication systems. As such, the communication unit 110 includes a radio frequency transmission unit that up-converts and amplifies a frequency of a transmitted signal, and a radio frequency reception unit that low-noise-amplifies and down-converts a frequency of a received signal. Specifically, when a user function allocated as a basic page is searched in the touch screen 140, the communication unit 110 is activated according to the control of the controller 160, and supports a communication function according to the user function. For example, when the user function is a function of connecting to a specific web server and providing a web page, the communication unit 110 forms a communication channel for connection to the web server, receives data for providing a basic page and transmits the received data to the controller 160 through the communication channel. Further, when the basic page is removed from the display panel 141, that is, another basic page is searched and the menu page is outputted in the display panel 141, the communication unit 110 temporarily releases the communication channel, or support transmission and reception of data for only maintaining channel connection.

The input unit 120 includes a multiple of input keys and function keys for receiving the input of number and letter information and setting various functions. The function keys includes a direction key, a side key and a shortcut key, etc. which are set to perform a specific function. Further, the input unit 120 generates a key signal related with a user setting and a function control of the terminal 100, and transmits the generated key signal to the controller 160. When the display unit of the terminal 100 is constructed as a touch screen 140, such an input unit 120 can be implemented as a QWERTY key map, DVORAK key map 3*4 key map and 4*3 key map, etc. including a multiple of keys outputted on the touch screen 140. That is, the input unit 120 can be substituted as an input function of the touch screen 140. Specifically, the input unit 120 generates the menu page included in the basic screen and an input signal capable of searching for at least one basic page according to the control of user. The input unit 120 can be provided in the form of a navigation key. The generated input signal can be transmitted to the controller 160, and then used as a command for searching for the basic page of the present invention.

The audio processing unit 130 includes audio data transmitted and received during a call, a Speaker (SPK) for outputting audio data stored in the storage unit 150, and a Microphone (MIC) for collecting user's voice or other audio signals during a call. Such an audio processing unit 130 supports an output of various effect sounds and guidance sounds related with the function of providing the basic screen of the present invention. For example, the audio processing unit 130 supports an output of effect sounds or guidance sounds according to generation of an input signal for changing the basic page in the menu page of the basic screen. Such an output of the effect sounds or guidance sounds is omitted based on user setting.

The touch screen 140 includes a display panel 141 and a touch panel 143. Such a touch screen 140 has a structure in which the touch panel 143 is arranged on the front side of the display panel 141.

The display panel 141 displays information inputted by user or information to be provided to user in addition to various menus. That is, the display panel 141 provides various screens according to the use of the terminal 100, such as a waiting screen, a message writing screen and a calling screen, etc. Such a display panel 141 can be constructed as a Liquid Crystal Display (LCD) and an Organic Light Emitted Diode (OLED), and the like. Further, the display panel 141 is positioned on the upper side or the lower side of the touch panel.

Specifically, the display panel 141 provides a menu page and a basic screen including at least one basic page. Further, the display panel 141 provides a specific page among the menu screen and at least one basic page as the initial page according to user setting, etc. The initial page is the first screen provided to user by the terminal 100, and is the page of the screen firstly outputted in the display panel 141 according to a case where the touch lock is released, a case where power is changed from turn-off state to turn-on state, and a case where a home key is pushed, etc.

Further, each page of the basic screen outputted on the display panel 141 is converted according to a touch event generated in the touch panel 143. The conversion method of pages is a conversion to a toggle method or in a specific direction. The basic page outputted in the display panel 141 is removed from the basic screen list 153 according to user's setting, or the page of a new user function is registered in the basic screen list 153 as the basic page. Further, the basic page, which is selected by user among basic pages, is defined as the initial page, and is operated as a page provided at the initial period when operating a terminal 100. The basic screen list 153 includes information about initial pages. Further, the display panel 141 outputs a screen of a list consisting of items of basic pages included in the basic screen list 153, or a multi-image screen, etc. The basic screen list 153 includes index information of the menu page and basic pages as well as information about the arrangement relation between pages. That is, the basic screen list 153 includes order information which changes a page, which is being currently outputted in the touch screen 140 according to an input signal inputted from at least one of the input unit 120 and the touch screen 140, to a specific page.

The touch panel 143 is placed in at least one of the upper side and the lower side of the display panel 141, generates a touch event according to a touched object, e.g., a contact of a user finger, and transmits the generated touch event to the controller 160. The sensor, which constitutes the touch panel 143, is arranged in the form of a matrix, and location information corresponding to a touch event generated in the touch panel and information about the type of a touch event are transmitted to the controller 160. Specifically, the touch panel 143 generates a touch event, which searches for the menu page and basic pages registered in the basic screen according to user input signal in the state where the basic screen is outputted. For example, a touch panel 143 generates a flick event according to user operation in the state where the basic page or the menu page is outputted, and the generated flock event is transmitted to the controller 160. This transmitted flick event is transmitted along with direction information according to the flick operation. Further, the touch panel 143 generates a touch event for removing the basic page registered in the basic screen list from the basic screen list, a touch event for registering an unregistered specific user function screen as the basic page, and a touch event for designating a specific basic page as the initial page among pre-registered basic pages, etc. The generated touch event is transmitted to the controller 160, and then used in performing a function corresponding to the feature.

The storage unit 150 stores a key map or a menu map for operation of the touch screen 140 as well as an application program for operation of a function according to an embodiment of the present invention. The key map and the menu map can be implemented in various forms. Such a storage unit 150 includes a program area and a data area.

The program area stores an operating system for the booting of the terminal 100 and operation of each of the above described components, and application programs for supporting various user functions of the terminal 100 such as an application program for replaying various files, an application program for supporting a calling function of the terminal 100, an web browser for connecting to an Internet server, an MP3 application program for replaying other sound sources, an image output application program for searching for a picture, etc., and a moving picture replay application program, etc. Specifically, the program area stores a basic screen support program 151.

The basic screen support program 151 is a program that supports management of various basic pages registered as the basic screen. Such a basic screen support program 11 includes an input unit 120, a routine for detecting an input signal for setting a specific user function as the basic page according to an input signal generated in at least one of the input unit 120 and the touch screen 140, and a routine for registering a user function screen corresponding to the detected input signal in the basic screen as the basic page. Further, the basic screen support program 151 includes a routine that outputs a registered basic page in the display panel 141 according to a user search, and a routine that manages a user function corresponding to the outputted basic page as the slip mode and activation mode according to the output state of the display panel 141 of the basic page. Further, the basic screen support program 151 includes a routine that sets a designated specific basic page as the initial page, and a routine that removes a designated basic page from the basic screen list.

The data area is an area where data generated according to a use of the terminal 100 is stored, and stores one or more icons according to the widget function and various contents. Further, the data area stores a user input inputted through the touch panel 143. Specifically, the data area stores data, which is necessary in operating a function of providing the basic screen, e.g., the basic screen list 153. The basic screen list 153 is composed including a menu page and at least one basic page item. The basic screen list 153 stored in the data area is updated by the basic screen support program 151. That is, the basic page item included in the basic screen list 153 is added to the list or removed from the list according to the addition or removal of the basic page. The basic screen list 153 is outputted in the display panel 141 according to user's request, and the list page, which consists of only information of items included in the basic screen list 153, and also included in the basic screen list 153. The list page consists of items written in text for each basic page, and consists of items of multi-images for basic pages according to user's setting or a setting change. Further, the basic screen list 153 includes information about the initial page as mentioned above, and also includes information about the location relation between pages.

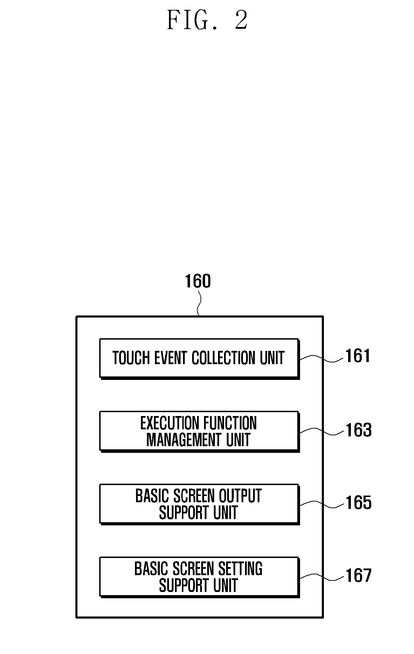

The controller 160 supports to perform an initialization process by controlling power supply to each component of the terminal 100. Further, the controller 160 controls various signal flows for supporting a basic screen function of the terminal 100. The controller 160 includes components as illustrated in FIG. 2.

FIG. 2 is a diagram illustrating the construction of a controller 160 according to an embodiment of the present invention in more detail.

Referring to FIG. 2, the controller 160 includes a touch event collection unit 161, an execution function management unit 163, a basic screen output support unit 165, and a basic screen setting support unit 167.

The touch event collection unit 161 collects a touch event which is generated in a touch screen 140. That is, the touch event collection unit 161 collects a touch event for selecting a menu item and a touch event for a page conversion in the state where a basic screen is outputted. Specifically, the touch event collection unit 161 collects a touch event for searching a basic page in the state where a menu page is outputted in the display panel 141. When a touch event for searching a basic page is collected, the touch event collection unit 161 transmits the touch event to the execution function management unit 163. Further, the touch event collection unit 161 transmits a touch event for searching a basic page to the basic screen output support unit 165.

The execution function management unit 163 supports to perform a user function according to a touch event transmitted by the touch event collection unit 161. Specifically, when the touch event is a touch event for searching a specific basic page, the execution function management unit 163 is related with the searched basic page and control to convert the user function at the slip mode state to the activation mode state.

If the booting of the initial terminal 100 is completed, the execution function management unit 163 checks the basic screen list 153 of the storage unit 150, and checks the basic pages included in the searched basic screen list 153. Further, the execution function management unit 163 supports data processing for operating user functions of the checked basic pages at the slip mode state. The slip mode state of the user function refers to a state for operating the user function at the minimum level except data transmission and reception which are actually necessary for operating the user function. That is, the state includes at least one of a state where a program module related with user function is loaded to a memory which is accessed by the controller 160 for the function execution, and a state where a communication channel is formed and maintained with the web server through the communication unit 110 when a connection to a specific web server is necessary in the loaded state. The execution function management unit 163 controls CPU allocation of the user function to the minimum, to control power consumption and data use. Further, the execution function management unit 163 collects a screen for operating a user function and provide the screen as the basic page.

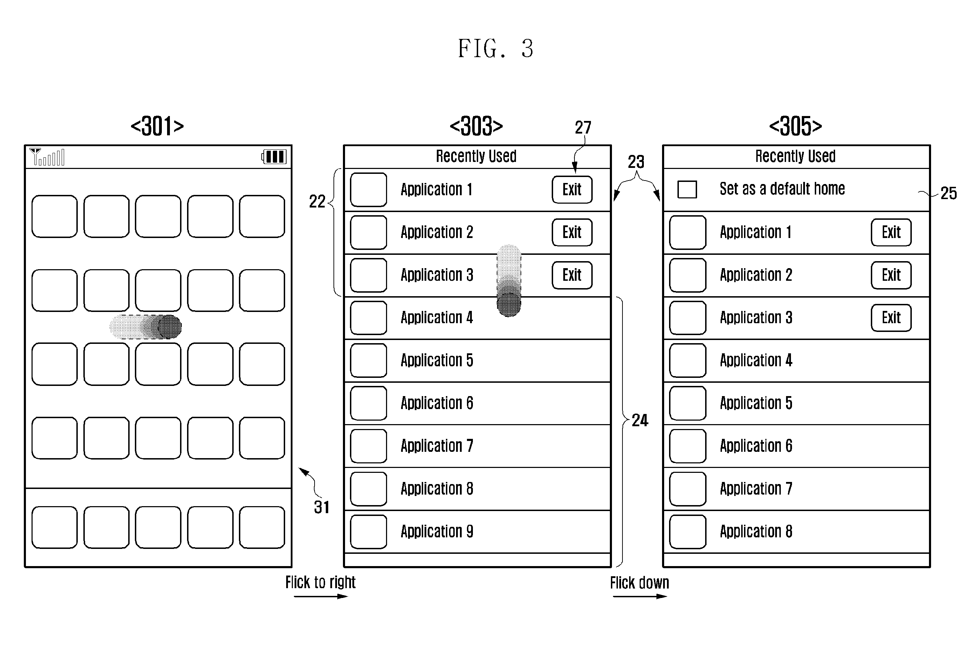

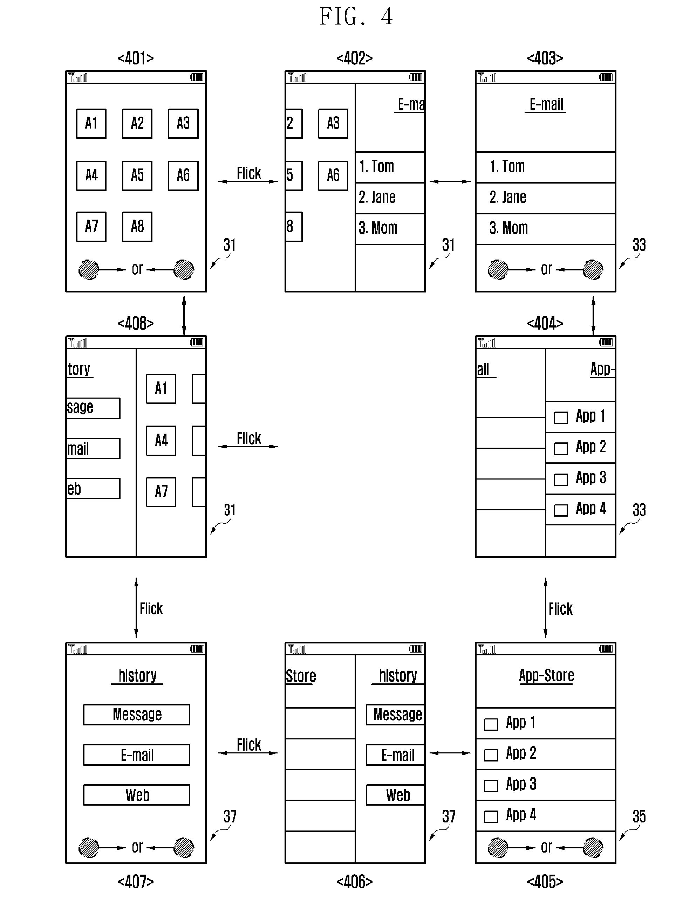

The basic screen output support unit 165 supports a function of outputting a specific page among a menu page and a basic page registered as the basic page as the initial page, and a page conversion according to transmission of the touch event. That is, the basic screen output support unit 165 checks the basic screen list 153 stored in the storage unit 150 for outputting the basic screen of the terminal 100, and checks a page which is set as the initial page in the basic screen list 153. Further, the basic screen output support unit 165 supports to output the menu screen or specific basic page, which is set as the initial page, in the display panel 141. Further, the basic screen output support unit 165 supports conversion into another basic page or the menu page according to a touch event inputted from the touch screen 140. The basic screen output support unit 165 supports to check the direction of an inputted touch event, and output another basic page or the menu screen according to the direction, which will be described in more detail with reference to FIGS. 3 and 4.

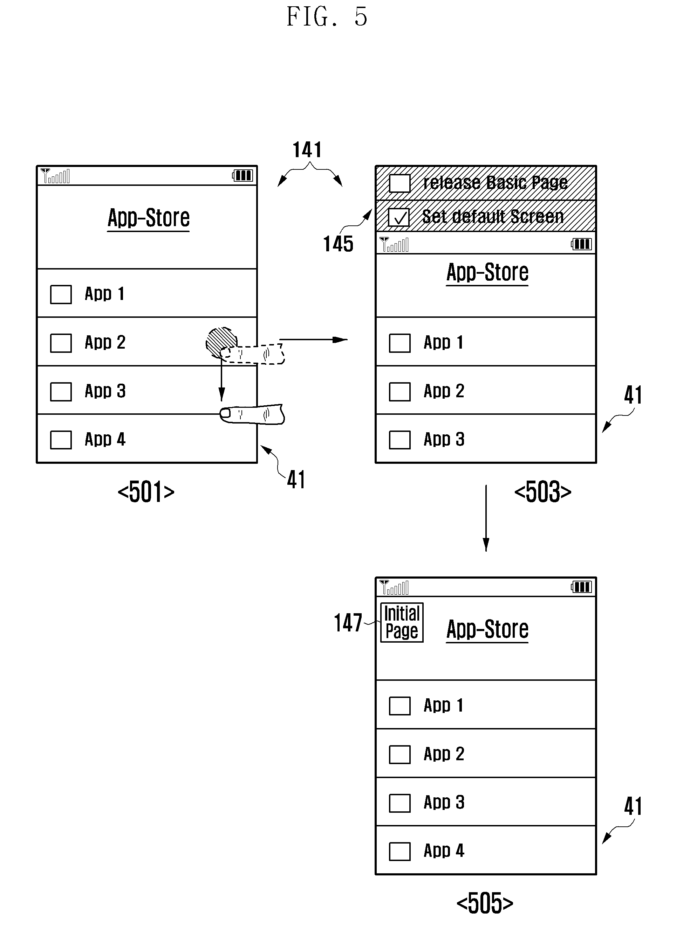

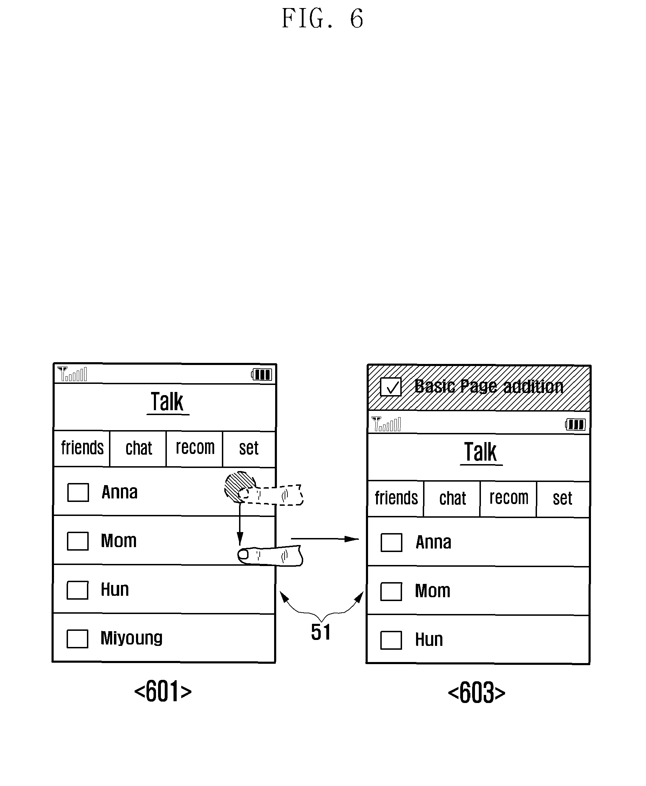

The basic screen setting support unit 167 supports registration of the basic page, the removal of the basic page and the setting of the initial page, etc. The basic screen setting support unit 167 provides various screen interfaces. The function of the basic screen setting support unit 167 will be described in more detail with reference to FIGS. 5 and 6.

FIG. 3 is a diagram illustrating a function management page among the basic screen providing function according to an embodiment of the present invention.

Referring to FIG. 3, if power is supplied to terminal 100, user supports to output the menu page 31 in the display panel 141 as shown in the screen of reference numeral 301 using a home key, etc. The screen of reference numeral 301 shows that the menu page 31 including 8 menu items (A1, A2, ... , A8) is outputted. A user selects a specific user function using menu items (A1, A2, ... , A8) outputted in the menu page 31.

Further, in the screen of reference numeral 301, when a user generates a predetermined specific event in areas where menu items (A1, A2, ... , A8) have not been outputted, or in a specific area, for example, user generates a flick event in the right direction, the controller 160 of the terminal 100 outputs a function management page as in the screen of reference numeral 303. That is, in the state where the menu page 31 corresponding to the initial page is outputted, if an input signal corresponding to turning the page or an input signal for searching a function management page 23 is generated, the function management page 23 is supported to be outputted in the display panel 141.

The function management page 23 is a screen for providing history items according to a use of the terminal 100. Such a function management page 23 supports to output a recently used user function item among user function items according to a use of the terminal 100 in the upper end of the screen. Further, the function management page 23 distinguishes a currently activated user function item from a deactivated user function item. In the case of first to third user function items 22, currently activated items are outputted, and in the case of fourth to ninth user function items 24, they are deactivated items and only the history is outputted. The activation mark, which is outputted in the first to third user function items 22, is a function button 27, and supports the corresponding user function according to user selection. The controller 160 supports to output the function button 27 for the termination of the user function at one end of the screen.

Further, if user performs a touch event, in which user moves the screen in a specific direction in the function management page 23, for example, a flick operation in a downward direction, the controller 160 controls to output a margin area 25, which sets the function management page 23 as the home screen, as in the screen of reference numeral 305. When a user selects a menu outputted in the margin area 25, i.e., the home screen setting function, the controller 160 controls to set the function management page 23 as the home screen. Thereafter, if one of a home key input of the terminal 100, an input signal for a change from a turn-off state to a turn-on state, and an input signal for conversion to the home screen according to the termination of a specific user function is generated, the controller 160 supports to output the function management page 23 as the initial page.

As described above, the basic screen providing function according to an embodiment of the present invention supports user to easily search for a specific screen, thereby making it easy for user to control the terminal.

FIG. 4 is a diagram illustrating a screen interface for illustrating a search function among basic screen providing function according to an embodiment of the present invention.

Referring to FIG. 4, if power is supplied to the terminal 100, user supports to output the menu page 31 in the display panel 141 as in the screen of reference numeral 401 using a home key, etc. The screen of reference numeral 401 shows that the menu page 31 including 8 menu items (A1, A2, ... , A8) is outputted. A user selects a specific user function using menu items (A1, A2, ... , A8) outputted in the menu page 31.

Further, in the screen of reference numeral 401, When a user generates a touch event, which is predetermined in the areas where menu items (A1, A2, ... , A8) are not outputted, or a specific area, for example, user generates a flick event in the left direction, the controller of the terminal 100 outputs the first basic page 33 by diverging to the screen of reference numeral 403. That is, in the state where the menu page 31 corresponding to the initial page is outputted, if an input signal corresponding of turning the page or an input signal for searching a basic page is generated, the controller 160 supports to output the first basic page 33 in the display panel 141.

In the process of converting the screen of reference numeral 401 to the screen of reference numeral 403, the controller 160 of the terminal 100 supports to output screen 402 in a form that part of screen 401 and part of screen 403 change as moved. That is, as screen 401 disappears from the display panel 141, screen 403 connected to screen 401 is outputted in the display panel 141. That is, the screen is changed in a form that screen 401 is connected to screen 403.

Further, it is assumed that in the first basic page 33, the user function is an e-mail function. If a specific input signal is generated in the state where the menu page 31 is outputted in the touch screen 140, the controller 160 supports to check the stored basic screen list 153, and change the menu page 31 to the first basic page 33 according to the basic screen list 153 and then output the first basic page 33. When preset schedule information is checked, to output the first basic page 33 in the touch screen 140 according to generation of the flick event in the left direction in the basic screen list 153, the controller 160 controls to change the e-mail function, which is a user function linked to the first basic page 33, from the slip mode to the activation mode. Further, the controller controls to collect a screen image according to activation of the e-mail function and output the screen image as the first basic page 33.

Further, in the state where the first basic page 33 of the e-mail function is outputted, if an input signal for searching another basic page, for example, a flick event in the left direction is generated again, the controller 160 controls an output of the second basic page 35 as in screen 405. The controller 160 controls to check the basic screen list 153 and output the second basic page 35 when a flick event in the left direction occurs after the first basic page 33. If it is assumed that the second basic page 35 is an application store connection function, the controller 160 controls to convert the application store connection function from the slip mode to the activation mode when a flick event in the left direction occurs, to output the second basic page 35. Further, if the application store connection function is activated, the controller collects a screen according to the function activation and provides the screen as the second basic page 35.

In the process of changing screen 403 to screen 405, screen 404, which provides the screen change effect of a page, in which screen 403 and screen 405 are connected, is temporarily outputted in the display panel 141. That is, as screen 403 gradually disappears from the display panel 141, screen 405 gradually appears in the display panel 141.

Similarly, if a specific input signal, i.e., a flick event in the left direction is generated in screen 405, the controller 160 supports to output the third basic page 37 as in screen 407. The third basic page 37 is a page that supports a list page output function for reading the list of basic pages. The controller 160 checks the basic screen list 153 information, and composes a screen of the list consisting of items of the entire pages included in the list as in screen 407. Further, the controller 160 composes each of the basic pages included in the basic screen list 153 and images, which represent the menu screen, in the form of a thumbnail, and provides a screen, which displays the thumbnail images as a multi-image, as a list page. Further, in the process of changing screen 405 to screen 407, screen 406 is temporarily outputted in the display panel 141 as in screen 404.

In screen 407, when a flick event in the left direction occurs, the screen returns to the menu page 31 as in screen 401. Further, when a flick event in the opposite direction, i.e., a flick event in the right direction occurs in each screen, the screen is turned to the previous page. For example, in the state where the third basic page 37, which is a list page, is outputted, if a flick event in the right direction occurs, the controller 160 supports to output the second basic page 35 as in screen 405. Further, in the state the second basic page 35 is outputted, if a flick event in the right direction occurs, the controller 160 controls to turn to screen 403, which outputs the first basic page 33. In this process, the controller 160 converts the application store connection function corresponding to the second page 35 to the slip mode, and converts the e-mail function corresponding to the first basic page 33 from the slip mode to the activation mode.

In the process of changing screen 407 to screen 401, as screen 407 is gradually removed from the display panel 141, screen 408, in which screen 401 is gradually outputted in the display unit 141, is outputted. Alternatively, in the process of changing screen 401 to screen 407, changing screen 407 to screen 405, changing screen 405 to screen 403, and changing screen 403 to screen 401, screen 402, screen 404, screen 406 and screen 408 are respectively outputted, but the outputted screen is displayed in a different form.

Further, occurrence of a flick event in left direction or right direction for turning a page was illustrated as an example, but the present invention is not limited to this example. That is, the terminal 100 performs page conversion not only by a flick event, but also by a tap event or a long event which is generated in the left or right area based on a specific position of the touch screen, for example, the center of the display panel 141, or performs page conversion by a flick event in the upper or lower direction.

Although a touch event for screen conversion is generated in the lower side as described above, alternatively, as illustrated in FIG. 3, a touch event, which is generated in an area where a menu icon is not outputted, for example, the center or edge, etc. of the screen, can also be a touch event for performing the same operation.

Further, when a home key is inputted in a specific screen, the screen is promptly converted into screen 401 which is set as the initial page. That is, when a home is pushed in screens 403, 405 and 407, screen 401 is promptly outputted.

Further, screen 407 is described above as a screen where the list page is outputted, and alternatively screen 407, i.e., the page adjacent to the menu page 131, can also be a page corresponding to a user function which was performed right before user converts the screen to the initial page. When a specific user function is performed, the controller 160 records a performance history about the user function, and supports the page corresponding to the previously performed user function to be outputted at the time of occurrence of a specific event based on the performance history.

FIG. 5 is a diagram illustrating a screen interface for illustrating an initial page setting among basic screen providing functions according to an embodiment of the present invention. It is assumed that a screen according to an application store connection function is defined as one of the basic pages registered in the basic screen list 153.

Referring to FIG. 5, if user generates an input signal which instructs to output a screen according to the activation of the application store connection function as a basic page 41, the controller 160 controls to output the screen in screen 501. Further, a user sets the basic page 41 according to the application store connection function as the initial page. The terminal 100 provides a function that supports to set the currently executed user function as the initial page.

Specifically, when one upper end of the basic page 41 is touched down and then dragged, moving the page in the downward direction, the terminal 100 supports to output a page setting area 145, which supports to select the currently selected basic page 41 as the initial page, in the screen as in screen 503. That is, the terminal 100 supports to output the page setting area 145 for the initial page setting and other settings in the margin generated according to the movement of the basic page 41. The page setting area 145 includes a basic page release list, which supports to remove the basic page from the basic screen list 153, and an initial page setting list. When a user selects the initial page setting list, the terminal 100 removes the page setting area 145 from the display panel 141 of the touch screen 140, and output the index area 147, which indicates that the basic page 41 according to the application store connection function has been set as the initial page, at one side of the screen. The output of the index area 147 is omitted depending on the intended design of terminal 100.

FIG. 6 is a diagram illustrating a screen interface for the basic page addition explanation among basic screen providing functions according to an embodiment of the present invention.

Referring to FIG. 6, a user outputs a screen according to performance of "Talk" function corresponding to the SMS messenger function among user functions of the terminal 100. If an input signal for "Talk" function activation is received from the input unit 120 and the touch screen 140, the terminal 100 loads a program module, which supports the user function, in the memory area supported for the execution in the storage unit 150, and control to perform server connection for the "Talk" function support. Further, the controller 160 supports to output the screen according to the activated Talk function in the touch screen 140.

Further, in the state where screen 601 is outputted, a user generates an input signal for calling a basic page addition function. For example, a user performs a touch drag operation which moves the Talk function basic page 51 in a specific direction. Then the terminal 100 moves the Talk function basic page 51 to one end of the screen, and output the generated setting menu area 55 in the screen as in screen 603. A user instructs to add the currently activated Talk function in the basic screen list 153 by selecting a basic page addition item outputted in the setting menu area 55. If the basic screen addition item is selected, the terminal 100 controls to collect the currently activated Talk function activation screen and add the screen to the basic screen list 153, and control to activate the user function by linking the user function to the item outputted in the list. Even if another user function is called or conversation into another screen occurs according to an input signal, the terminal controls to convert into the slip mode without terminating Talk function selected as the basic page. Further, if the Talk function is selected, the terminal 100 controls to activate again the user function converted into the slip mode.

As described above, the terminal 100, which supports the control of the basic screen of the present invention, provides specific user functions as the basic page, and provides the functions in the same level as that of the menu page so that the terminal 100 is operated as a page provided at the initial period. As such, the terminal 100 provides a quicker response in operating a specific user function, and controls to search for and activate various user functions only with a simple input signal generation operation, for example, a simple touch operation.

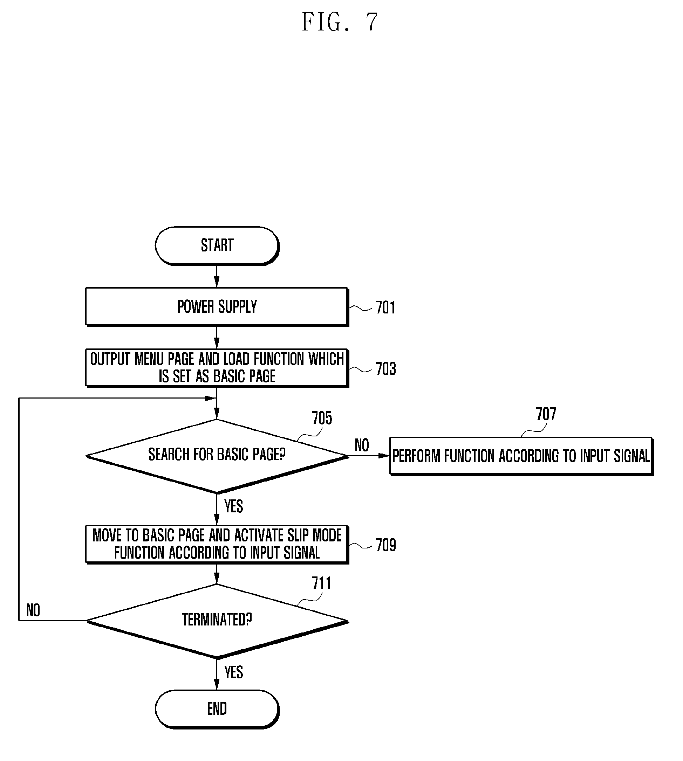

FIG. 7 is a flowchart illustrating a method of providing a basic screen according to an embodiment of the present invention.

Referring to FIG. 7, according to the method of providing a basic screen of the present invention, first, if power is supplied from the power source unit, the controller 160 of the terminal 100 distributes supplied power to each component of the terminal 100, in Step 701. Specifically, the controller 160 controls to provide power to terminal 100 components for providing the basic screen of the present invention, for example, a touch screen 140 and a storage unit 150, and provide power to related components for activation of various user functions, for example, a communication unit 110.

As power is supplied, if each component is in the state that is operated, the controller 160 controls to load user functions which are set as the basic page which supports to output the menu page in the touch screen 140, in Step 703. When the menu page is set as the initial page, the controller 160 outputs the menu page as the initial page. Further, the controller 160 controls to check the basic screen list 153, to load the user function related with the basic pages, and load user functions linked to each basic page. In such a process, the controller 160 controls to first load user functions related with the basic pages adjacent to the initial page currently outputted on the touch screen 140 in the sequence. The controller 160 checks the basic pages disposed adjacent to the page, which is set as the initial page in the basic screen list 153, in the sequence, and user functions of the basic pages. Further, the controller 160 maintains the state where user functions are loaded to the memory for execution without activating the user function in the process of loading each user function, or manage the functions at the slip mode state which maintains the channel without performing separate data transmission and reception in the case of a function that requires server connection, etc.

Next, the controller 160 checks whether an input signal for searching a basic page is generated, in Step 705. When an input signal generated in such a process is not an input signal for searching a basic page, the controller 160 controls a signal flow which is necessary for performing a function according to an input signal, in Step 707. That is, when an input signal generated in the menu page is an input signal for selecting a specific menu item, the controller 160 supports to activate a user function selected by the input signal, and output a screen for operation of the user function in the touch screen 140.

Further, when an input signal for searching a basic page is generated at step 705, the controller 160 controls to move to the basic page according to the input signal, and activate the user function which has been stopped or maintained in the slip mode, in Step 709. The controller 160 checks the movement order defined in the basic screen list 153, and control movement to the basic page screen according to the generated input signal. Further, the controller 160 checks the user function of the basic page defined in the basic screen list 153, and convert the function from the slip mode to the activation mode.

Next, the controller 160 supports to check generation of an input signal for function termination of the terminal 100, in Step 711, and returns to step 705 to perform the following procedure when a separate input signal is not generated.

As described above, the method of controlling a basic screen according to an aspect of the present invention allows user to easily search for at least one basic page which is set in the same level as that of the menu page, and supports to automatically activate the user function related with the basic page. As such, the method of controlling the basic screen according to an aspect of the present invention allows user to easily search for a function and a screen.

Further, the terminal 100 is comprised of components, including but not limited to a Near Field Communication (NFC) module for near field communication, an interface for data transmission and reception according to the wired communication method or wireless communication method of the terminal 100, an Internet communication module for performing an Internet function by communicating with an Internet network, and a digital broadcast module for receiving and replaying a digital broadcast, etc., depending on the provided type.

Further, the terminal 100 according to an embodiment of the present invention includes devices which provides basic pages of the same level as that of the menu page. For example, the terminal 100 includes all mobile communication terminals operated according to communication protocols corresponding to various communication systems as well as all information communication devices and multimedia devices such as a Portable Multimedia Player (PMP), a digital broadcast player, a Personal Digital Assistant (PDA), a music player (e.g., an MP3 player), a portable game terminal, a smart phone, a notebook computer and a handheld Personal Computer (PC), etc., and application devices thereof.

According to an embodiment of the present invention, a user quickly and easily finds and operates a user-desired user function, and allows electric power to be efficiently managed in a process for performing the same.

Although various embodiments of the present invention have been described in detail herein, it will be to those skilled in the art that various changes may be made without departing from the spirit and scope of the present invention, as defined by the appended claims.

## Claims

1. A method for controlling a basic screen, the method comprising:
receiving an input signal requesting an output of a basic screen of a terminal;
checking a basic screen list, including a menu page and a list of one or more basic pages which are managed in the same level as that of the menu page and include screen information according to the basic screen output request;
selecting a page which is set as an initial page from the basic screen list; and
outputting the selected initial page.

2. The method of claim 1, further comprising:
loading a user function linked to one or more basic pages included in the basic screen list, and maintaining the user function at slip mode.

3. The method of claim 2, further comprising at least one of:
activating a user function linked to one or more basic pages and maintained at slip mode, when the initial page is a basic page corresponding to a specific user function;
outputting history items according to a use of a terminal in the form of a list, when the initial page is a function management page corresponding to a history function according to the use of the terminal;
separately outputting currently activated items and deactivated items among the history items; and
outputting a function button configured to terminate the activated items.

4. The method of claim 2, further comprising at least one of:
receiving at least one of an input signal for searching another basic page and an input signal for turning a page and outputting another basic page in the screen according to the input signal; and
activating a user function which is linked to another basic page and is maintained at slip mode and converting the state of the user function, which is linked to the basic page that has been set as the initial page, into slip mode.

5. The method of claim 4, wherein outing another basic page comprises one of:
outputting a screen according to activation of the user function linked to another basic page;
outputting a screen of a list of basic pages stored in the basic screen list;
outputting a screen of a multi-image consisting of thumbnail images of basic pages stored in the basic screen list; and
outputting a basic page corresponding to the previous activated user function of the terminal.

6. The method of claim 1, further comprising at least one of:
receiving at least one of an input signal for searching at least one basic page and an input signal for turning a page, when the initial page is a menu page and converting the screen from the menu page to the basic page according to the input signal; and
activating a user function which is linked to the basic page outputted in the current screen, and is maintained at slip mode.

7. The method of claim 1, further comprising at least one of:
activating a specific user function which is not registered as a basic page in the basic screen list, and then adding the screen of the currently activated user function as the basic page in the basic screen list, when an input signal for adding the basic page in the state where a screen according to the activated specific user function is outputted;
outputting the specific basic page according to an input signal reception for an output of a specific basic page in the state where the initial page is outputted, and setting the specific basic page as the initial page, when an input signal for setting the specific basic page as the initial page; and
removing the basic page from the basic screen list, when an input signal for removing the basic page from the basic screen list in the state where the specific basic page is outputted.

8. A terminal for controlling a basic screen, the terminal comprising:
at least one of an input unit for generating an input signal that requests an output of a basic screen, and a touch screen;
a storage unit for storing a basic page list including a menu page and one or more basic pages which are managed in the same level as that of the menu page, and include screen information corresponding to at least one user function; and
a controller that controls to output a page, which is set as the initial page in the basic screen list, in the touch screen.

9. The terminal of claim 8, wherein the controller controls to load a user function, which is linked to basic pages included in the basic screen list, and maintain the user function at slip mode, and controls to activate the user function, which is linked to the basic page and is maintained at slip mode, when the initial page is a basic page corresponding to a specific user function.

10. The terminal of claim 8, wherein the controller controls to output another basic page in a screen according to an input signal, and activate a user function of another basic page, which is linked to the another basic page and is maintained at slip mode, when at least one of an input signal for searching another basic page and an input signal for turning a page is received.

11. The terminal of claim 10, wherein the controller controls to convert the state of a user function, which is linked to the basic page that has been set as the initial page, into slip mode.

12. The terminal of claim 11, wherein the touch screen outputs one of:
a screen according to a user function activation linked to the another basic page;
a list screen of basic pages stored in the basic screen list;
a multi-image screen consisting of thumbnail images of basic pages stored in the basic screen list;
a basic page corresponding to the user function activated right before the terminal; and
a function management page including a function button, configured to divide currently activated items and deactivated items among one or more history items according to a use of a terminal, and can terminate the activated items.

13. The terminal of claim 8, wherein the controller controls to convert the screen from the menu page to the basic page according to an input signal when at least one of an input signal for searching at least one basic page and an input signal for turning a page in the state where the initial page is a menu page.

14. The terminal of claim 13, wherein the controller controls to activate a user function which is linked to the basic page outputted in the current screen, and is maintained at slip mode.

15. The terminal of claim 8, wherein the controller supports at least one of:
an addition function of activating a specific user function which is not registered as a basic page in the basic screen list, and adding the screen of the currently activated specific user function as the basic page in the basic screen list, when an input signal for addition of a basic page is received in the state where a screen according to the activated specific user function is outputted;
a setting function of outputting a specific basic page according to reception of an input signal for outputting the specific basic page in the state where the initial page is outputted, and setting the specific basic page as the initial page, when an input signal for setting the specific page as the initial page is received; and
a removing function of removing the basic page from the basic screen list, when an input signal for removing the basic page from the basic screen list in the state where a specific basic page is outputted.
